(19)

**Europäisches Patentamt**
**European Patent Office**
**Office européen des brevets**

(11) **EP 4 641 671 A2**

(12) **EUROPEAN PATENT APPLICATION**

(43) Date of publication:
**29.10.2025 Bulletin 2025/44**

(21) Application number: **25167378.6**

(22) Date of filing: **31.03.2025**

(51) International Patent Classification (IPC):
*H01M 4/36* (2006.01)     *H01M 4/505* (2010.01)
*H01M 4/525* (2010.01)     *H01M 4/58* (2010.01)
*H01M 4/131* (2010.01)     *H01M 10/0525* (2010.01)
*H01M 4/02* (2006.01)

(52) Cooperative Patent Classification (CPC):
**H01M 4/131; H01M 4/364; H01M 4/505;**
**H01M 4/525; H01M 4/5825;** H01M 10/0525;
H01M 2004/021; H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **23.04.2024   KR 20240054053**

(71) Applicant: **SAMSUNG SDI CO., LTD.**
**Yongin-si, Gyeonggi-do 17084 (KR)**

(72) Inventors:
 • **KIM, Sangmi**
   **Yongin-si (KR)**
 • **LEE, Soonrewl**
   **Yongin-si (KR)**
 • **KIM, Young-Ki**
   **Yongin-si (KR)**
 • **CHOI, Aram**
   **Yongin-si (KR)**
 • **DOO, Sungwook**
   **Yongin-si (KR)**
 • **KANG, Gwiwoon**
   **Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, PREPARATION METHOD OF THE SAME, AND RECHARGEABLE LITHIUM BATTERY INCLUDING THE SAME**

(57)     A positive electrode active material for a rechargeable lithium battery, a preparation method of the same, and a rechargeable lithium battery including the same are provided. A positive electrode active material includes a first particle including a compound represented by Formula 1 and having a first average particle diameter, and a second particle including a compound represented by Formula 2 and having a second average particle diameter smaller than the first average particle diameter. An amount of the second particle is equal to or greater than an amount of the first particle.

FIG. 6

## Description

### BACKGROUND

The present disclosure herein relates to a positive electrode active material for a rechargeable lithium battery, a preparation method of the positive electrode active material, and a rechargeable lithium battery including the positive electrode active material. For example, the present disclosure relates to a positive electrode active material including an olivine-based lithium compound, a preparation method of the positive electrode active material including the olivine-based lithium compound, and a rechargeable lithium battery including the positive electrode active material including the olivine-based lithium compound.

Recently, with the rapid proliferation of battery-utilizing electronic devices (such as mobile phones and/or laptop computers), and/or electric vehicles, the demand for rechargeable batteries with relatively high energy density and high capacity has significantly increased. Accordingly, extensive research and development efforts have been undertaken to enhance (improve) the performance of the rechargeable batteries, such as rechargeable lithium batteries.

A rechargeable lithium battery includes a positive electrode and a negative electrode each including an active material capable of intercalation and deintercalation of lithium ions, and an electrolyte solution. Electrical energy is generated (produced) by oxidation and reduction reactions when the lithium ions are intercalated into and deintercalated from the positive electrode and the negative electrode.

### SUMMARY

Aspects of embodiments of the present disclosure are directed toward a positive electrode active material with (having) high energy density, high operating voltage, and high conductivity.

Aspects of embodiments of the present disclosure are directed toward a rechargeable lithium battery with (having) high energy density, high operating voltage, and enhanced (improved) low-temperature characteristics.

Additional aspects will be set forth in part in the description which follows and, in part, will be apparent from the description, or may be learned by practice of the presented embodiments of the disclosure.

An embodiment of the present disclosure provides a positive electrode active material including a first particle including a compound represented by Formula 1 and having a first average particle diameter, and a second particle including a compound represented by Formula 2 and having a second average particle diameter smaller than the first average particle diameter. An amount of the second particle is equal to or greater than an amount of the first particle.

$$\text{Formula 1} \qquad \text{Li}_{a1}\text{Fe}_{x1}\text{B}_{y1}\text{PO}_{4-b1}$$

In Formula 1, $0.8 \leq a1 \leq 1.2$, $0.1 \leq x1 \leq 1.0$, $0.001 \leq y1 \leq 0.05$, $0 \leq b1 \leq 0.05$, and $x1 + y1 = 1$ are satisfied.

$$\text{Formula 2} \qquad \text{Li}_{a2}\text{Mn}_{z2}\text{Fe}_{x2}\text{B}_{y2}\text{PO}_{4-b2}$$

In Formula 2, $0.8 \leq a2 \leq 1.2$, $0.5 \leq z2 \leq 0.9$, $0.1 \leq x2 \leq 0.5$, $0.001 \leq y2 \leq 0.05$, $0 \leq b2 \leq 0.05$, and $x2 + y2 + z2 = 1$ are satisfied.

In Formula 1 and Formula 2, B is at least one element selected from among the group including titanium (Ti), magnesium (Mg), vanadium (V), and/or niobium (Nb) (e.g., selected from the group consisting of titanium (Ti), magnesium (Mg), vanadium (V), and niobium (Nb)).

In one or more embodiments of the present disclosure, a preparation method of a positive electrode active material includes preparing a first particle having a first average particle diameter, preparing a second particle having a second average particle diameter smaller than the first average particle diameter, and mixing the first particle and the second particle. The preparing of the first particle includes mixing an iron phosphate precursor, a first lithium source, a first carbon source, and a first dopant source to form a first mixture, drying the first mixture through spray drying, and calcining the dried first mixture. The preparing of the second particle includes mixing a manganese iron phosphate precursor, a second lithium source, a second carbon source, and a second dopant source to form a second mixture, performing wet grinding on the second mixture, drying the second mixture, and calcining the dried second mixture. The first particle and the second particle are mixed, where an amount of the second particle is equal to or greater than an amount of the first particle.

In one or more embodiments of the present disclosure, a rechargeable lithium battery may include the above-described positive electrode active material.

At least some of the above and other features of the invention are set out in the claims.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:

FIG. 1 is a simplified conceptual diagram illustrating a rechargeable lithium battery, according to one or more embodiments of the present disclosure;

FIGS. 2-5 are schematic views each illustrating a rechargeable lithium battery, according to one or more embodiments, FIG. 2 shows a cylindrical battery, FIG. 3 shows a prismatic battery, and FIGS. 4 and 5 show pouch-type (kind) batteries;

FIG. 6 is an enlarged view of a positive electrode active material layer of a rechargeable lithium battery, according to one or more embodiments of the present disclosure;

FIG. 7 is a flowchart showing a preparation method of a positive electrode active material, according to one or more embodiments of the present disclosure;

FIG. 8A is a scanning electron microscope (SEM) image of a positive electrode active material according to Example 1 of the present disclosure; and

FIG. 8B is a SEM image of a positive electrode active material, according to Example 3 of the present disclosure.

## DETAILED DESCRIPTION

Hereinafter, embodiments of the present disclosure will be described clearly and in more detail to such an extent that those skilled in the art easily implement the present disclosure. In order to fully understand the configuration and effect of the present disclosure, embodiments of the present disclosure will be described in more detail with reference to the accompanying drawings. The present disclosure may, however, be embodied in one or more suitable forms and should not be construed as limited to one or more embodiments set forth herein, and one or more suitable changes and modifications may be made. Rather, these embodiments are provided so that this disclosure will be thorough and complete, and will fully convey the scope of the present disclosure to those skilled in the art to which the present disclosure pertains.

In the present specification, it will be understood that, if (e.g., when) an element is referred to as being on another element, the element may be directly on the other element or intervening elements may be present therebetween. In the drawings, thicknesses of components are exaggerated for effectively explaining the technical contents. Like reference numerals or symbols refer to like elements throughout, and duplicative descriptions thereof may not be provided in the specification.

The singular forms (e.g., "a," "an," and/or "the") are intended to include the plural forms (including "at least one," unless the context clearly dictates otherwise) as well, unless the context clearly indicates otherwise. In addition, unless otherwise specially noted, the phrase "A or B" may indicate "A but not B", "B but not A", or "A and B". The terms "comprise(s)/include(s)/have(has)" and/or "comprising/including/having" utilized in the description do not exclude the presence or addition of one or more other components. Furthermore, as utilized herein, the term "and/or" includes any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the specification, "combination thereof" may refer to a mixture, a stack, a composite, a copolymer, an alloy, a blend, and a reaction product of components.

In one or more embodiments, the term "layer" herein includes not only a shape formed on the whole surface if (e.g., when) viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

Further, in this specification, the phrase "on a plane," or "plan view," indicates viewing a target portion from the top, and the phrase "on a cross-section" indicates viewing a cross-section formed by vertically cutting a target portion from the side.

The term "particle diameter", "particle size", and/or the like as utilized herein refers to an average diameter of particles if (e.g., when) the particles are spherical, and refers to an average major axis length of particles if (e.g., when) the particles are non-spherical. For example, a particle diameter may be an average particle diameter. Also, the particle diameter may refer to an average particle diameter ($D_{50}$) which refers to a diameter of particles at a cumulative volume of about 50 vol% in a particle size distribution. $D_{50}$ refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, "diameter" indicates an average particle diameter, and when the particles are non-spherical, the "diameter" indicates a major axis length. The average particle diameter ($D_{50}$) may be measured by a method widely suitable (known) to those skilled in the art, for example, may be measured by a particle size analyzer, for example, HORIBA, LA-950 laser particle size analyzer, or may also be measured utilizing a transmission electron microscope (TEM) or a scanning electron microscope (SEM). In one or more embodiments, the average particle diameter is measured by a measuring device utilizing dynamic light-scattering, wherein the number of particles is counted for each particle size range by performing data analysis, and an average particle diameter ($D_{50}$) value may then be obtained by calculation therefrom. Also, the average particle diameter ($D_{50}$) may be measured utilizing a laser diffraction method. When measured by the laser diffraction method, specifically, after dispersing particles to be measured in a dispersion medium, the dispersion medium is introduced into a commercial laser diffraction particle size measurement instrument (e.g., Microtrac MT 3000) and irradiated with ultrasonic waves of about 28 kHz at an output of about 60 W, and the average particle diameter ($D_{50}$) based on about 50% of particle size distribution in the measurement instrument may then be calculated.

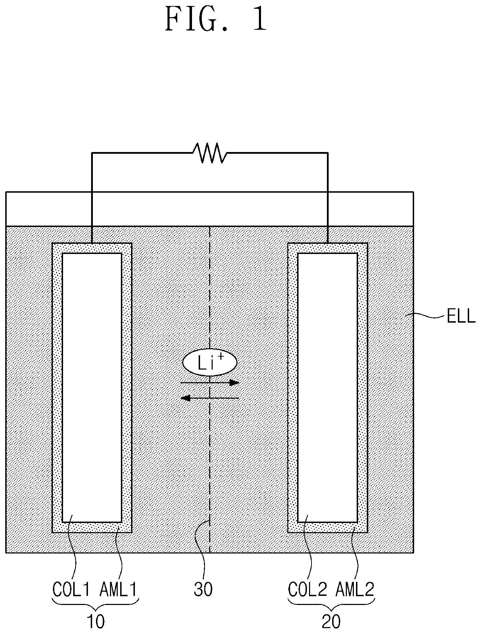

FIG. 1 is a simplified conceptual diagram illustrating a rechargeable lithium battery, according to one or more embodiments of the present disclosure. Referring to FIG. 1, the rechargeable lithium battery may include a positive electrode 10, a negative electrode 20, a separator 30, and/or an electrolyte solution ELL.

The positive electrode 10 and the negative electrode 20 may be spaced and/or apart (e.g., spaced apart or separated) from each other with the separator 30 therebetween. The separator 30 may be arranged between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL (e.g., the positive electrode 10, the negative electrode 20, and the separator 30 may be immersed in the electrolyte solution ELL).

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

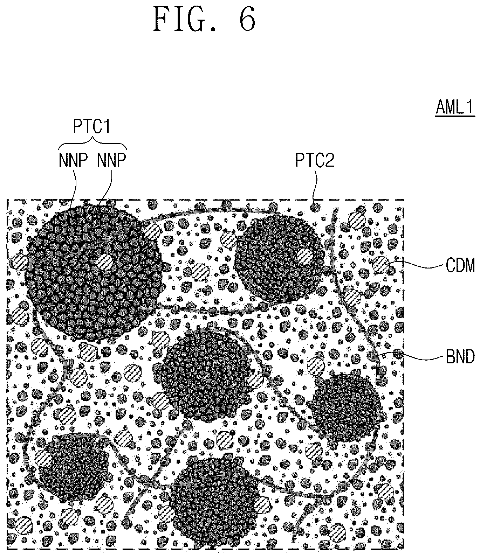

The positive electrode 10 for a rechargeable lithium battery may include a current collector COL1 and/or a positive electrode active material layer AML1 formed on the current collector COL1. The positive electrode active material layer AML1 may include a positive electrode active material and may further include a binder and/or a conductive material (e.g., electron conductor). The positive electrode active material layer AML1 according to one or more embodiments of the present disclosure will be described in more detail with reference to FIG. 6. Aluminium (Al) may be utilized for the current collector COL1, but the present disclosure is not limited thereto.

## Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material or electron conductor).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material based on 100 wt% of a total weight of the negative electrode active material layer AML2.

The binder may serve to attach the negative electrode active material particles well to each other and also to attach the negative electrode active material well to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and/or a (e.g., any suitable) combination thereof.

If (e.g., when) an aqueous binder is utilized as the negative electrode binder, a cellulose-based compound capable of imparting viscosity may be further included. The cellulose-based compound may include at least one of carboxymethyl cellulose, hydroxypropylmethyl cellulose, methyl cellulose, and/or an alkali metal salt thereof. The alkali metal may include sodium (Na), potassium (K), and/or lithium (Li).

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be utilized to impart conductivity (e.g., electrical conductivity) to the electrode. Any material that does not cause chemical change (e.g., does not cause an undesirable chemical change in the rechargeable lithium battery) and that conducts electrons may be utilized in the battery. Non-limiting examples of the conductive material may include a carbon-based material such as natural graphite, artificial graphite, carbon black, acetylene black, ketjen black, a carbon fiber, a carbon nanofiber, and/or a carbon nanotube; a metal-based material including copper, nickel, aluminium, silver, and/or the like in a form of a metal powder and/or a metal fiber; a conductive polymer such as a polyphenylene derivative; and/or a (e.g., any suitable) mixture thereof.

The negative current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

## Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example. crystalline carbon, amorphous carbon and/or a (e.g., any suitable) combination thereof. The crystalline carbon may be graphite such as non-shaped, sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material and/or a Sn-based negative electrode active material. The Si-based negative electrode active material may include silicon, a silicon-carbon composite (e.g., $SiO_x$, $0 < x \leq 2$), and/or a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnO_x$ ($0 < x \leq 2$, e.g., $SnO_2$), a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled (e.g., the primary silicon particles are agglomerated to form the secondary particle), and an amorphous carbon coating layer (shell) on the surface of the secondary particle (e.g., the secondary particle is coated with the amorphous carbon). In some embodiments, the amorphous carbon may also be between the primary silicon particles, and for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and/or silicon particles and an amorphous carbon coating layer on a surface of the core.

The Si-based negative electrode active material and/or the Sn-based negative electrode active material may be utilized in combination with a carbon-based negative electrode active material.

## Separator 30

Depending on the type (kind) of the rechargeable lithium battery, the separator 30 may be present between the positive electrode 10 and the negative electrode 20. The separator 30 may include polyethylene, polypropylene, polyvinylidene fluoride, a multilayer film of two or more layers of polyethylene, polypropylene, and/or polyvinylidene fluoride, and/or a mixed multilayer film, such as a polyethylene/polypropylene two-layer separator, a polyethylene/polypropylene/polyethylene three-layer separator, a polypropylene/polyethylene/polypropylene three-layer separator, and/or the like.

The separator 30 may include a porous substrate and/or a coating layer including an organic material, an inorganic material, and/or a (e.g., any suitable) combination thereof on one or both surfaces (e.g., opposite surfaces) of the porous substrate.

The porous substrate may be a polymer film formed of any one selected from among polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (e.g., TEFLON®), and/or a copolymer or mixture of two or more thereof.

The organic material may include a polyvinylidene fluoride-based polymer and/or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof, but the present disclosure is not limited thereto.

The organic material and the inorganic material may be mixed in one coating layer, and/or a coating layer including an organic material and a coating layer including an inorganic material may be stacked.

## Electrolyte Solution ELL

The electrolyte solution ELL for a rechargeable lithium battery may include a non-aqueous organic solvent and/or a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (where R is a C2 to C20 linear, branched, and/or cyclic hydrocarbon group, a double bond, an aromatic ring, or an ether bond), and/or the like; amides such as dimethylformamide, and/or the like; dioxolanes such as 1,3-dioxolane, 1,4-dioxolane, and/or the like; and/or sulfolanes, and/or the like).

The non-aqueous organic solvents may be utilized alone or in combination of two or more.

In addition, if (e.g., when) utilizing a carbonate-based solvent, a cyclic carbonate and a chain carbonate may be mixed and utilized, where the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and/or lithium bis(oxalato)borate (LiBOB).

**Rechargeable Lithium Battery**

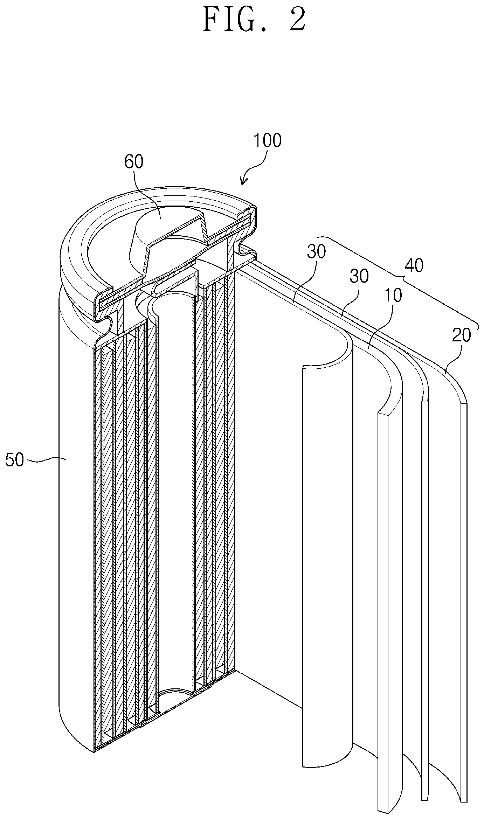

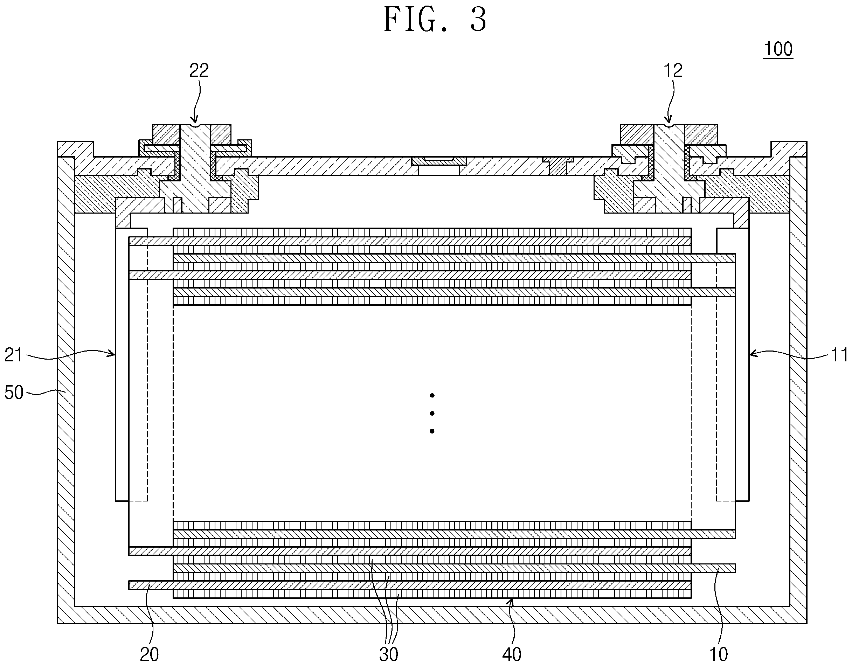

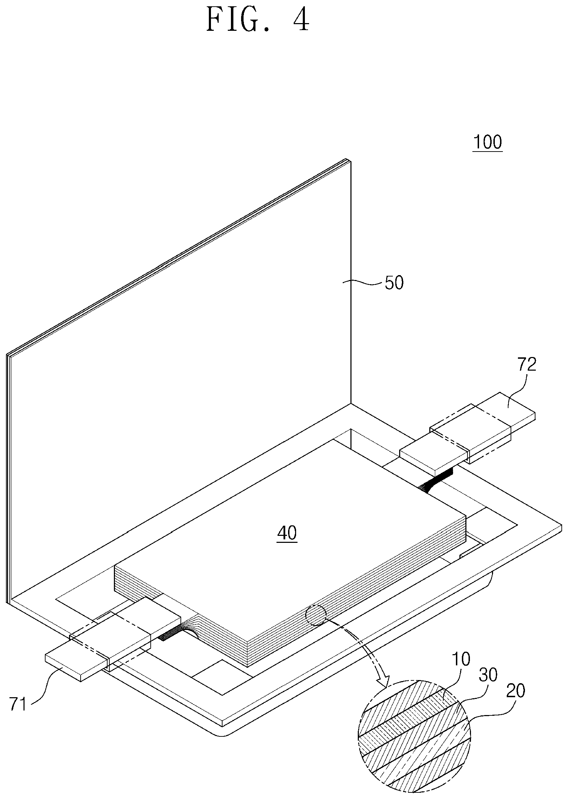

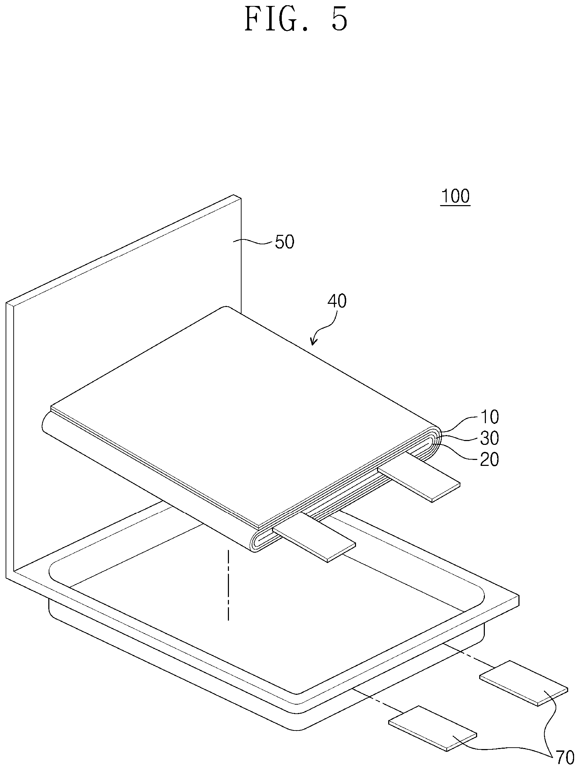

The rechargeable lithium battery may be classified into cylindrical, prismatic, pouch, or coin-type (kind) batteries, and/or the like depending on their shape. FIGS. 2 to 5 are schematic views each illustrating a rechargeable lithium battery according to one or more embodiments. FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and/or a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIG. 6 is an enlarged view of a positive electrode active material layer of a rechargeable lithium battery, according to one or more embodiments of the present disclosure. Referring to FIG. 6, as previously described, the positive electrode active material layer AML1 (see FIG. 1) may include a first particle PTC1, a second particle PTC2, a conductive material CDM, and a binder BND. A plurality of first particles PTC1 and a plurality of second particles PTC2 constitute a positive electrode active material, according to one or more embodiments of the present disclosure.

The positive electrode active material layer AML1 may further include an additive that may serve as a sacrificial positive electrode.

An amount of the positive electrode active material PTC1 and PTC2 in the positive electrode active material layer AML1 may be about 90 wt% to about 99.5 wt% with respect to 100 wt% of a total weight of the positive electrode active material layer AML1. An amount of each of the binder BND and the conductive material CDM may be about 0.5 wt% to about 5 wt% with respect to 100 wt% of the total weight of the positive electrode active material layer AML1.

The binder BND may bind the first particle PTC1, a second particle PTC2, and the conductive material CDM to each other. For example, the binder BND may include at least one selected from among the group including polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, and/or polypropylene, a styrene-butadiene rubber, a (meth)acrylated styrene-butadiene rubber, an epoxy resin, a (meth)acrylic resin, a polyester resin, and/or nylon (e.g., include at least one selected from the group consisting of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon), but one or more embodiments of the present disclosure is not limited thereto.

The conductive material CDM may be utilized to improve conductivity of the positive electrode active material layer AML1. Any conductive material that does not cause chemical change of the positive electrode active material layer AML1 may be utilized, without limitation, as the conductive material CDM. Examples of the conductive material CDM may include a carbon-based material such as natural graphite, artificial graphite, carbon black, acetylene black, ketjen black, a carbon fiber, a carbon nanofiber, and/or carbon nanotube; a metal-based material including copper, nickel, aluminium, silver, and/or the like in a form of a metal powder and/or a metal fiber; a conductive polymer such as a polyphenylene derivative; and/or a (e.g., any suitable) mixture thereof.

Hereinafter, each of the first particle PTC1 and the second particle PTC2 will be described in more detail.

**First Particle PTC1**

The first particle PTC1 may have a form of polycrystal, and include a secondary particle in which at least two primary particles NNP are aggregated (e.g., agglomerated). For example, one first particle PTC1 may include a plurality of primary particles NNP that are aggregated (e.g., agglomerated) with each other (e.g., an aggregation (agglomeration) of primary particles NNP). The first particle PTC1 may have a sphere and/or oval shape.

In one or more embodiments, the first particle PTC1 may include a coating layer on a surface of the first particle PTC1. The coating layer may cover the entire surface of the first particle PTC1, or may cover a portion of the surface of the first particle PTC1. For example, the coating layer may include carbon and/or a carbon-including compound. The first particle PTC1 may have improved structural stability and electrical conductivity due to the coating layer.

The coating layer may further include at least one selected from among the group including a titanium-including compound, a magnesium-including compound, and/or a vanadium-including compound (e.g., at least one selected from the group consisting of a titanium-including compound, a magnesium-including compound, and a vanadium-including compound). A metal-including compound, such as the titanium-including compound, the magnesium-including compound, and the vanadium-including compound, may be, for example, a metal oxide, a metal hydroxide, a metal carbonate, and/or a composite or mixture thereof. The metal-including compound may further include another metal and/or non-metal element. For example, the metal-including compound may further include lithium.

In one or more embodiments, the first particle PTC1 may further include a grain boundary coating layer on surfaces of the primary particles NNP. The grain boundary coating layer may be present inside the first particle PTC1. The grain boundary coating layer may be formed along an interface between the primary particles NNP inside the first particle PTC1. For example, the grain boundary coating layer may refer to a material applied to the grain boundary inside the first particle PTC1. The grain boundary coating layer may include carbon and/or a carbon-including compound. The grain boundary coating layer may further include at least one selected from among the group including a titanium-including compound, a magnesium-including compound, and/or a vanadium-including compound (e.g., the grain boundary coating layer may further include at least one selected from the group consisting of a titanium-containing compound, a magnesium-containing compound, and a vanadium-containing compound).

The inside of the first particle PTC1 may refer to an entire inner region of the first particle PTC1 excluding the surface of the first particle PTC1. For example, the inside of the first particle PTC1 may refer to an entire inner region from about 10 nm depth from the outer surface of the first particle PTC1, or a region from about 10 nm depth to about 2 $\mu$m depth from the outer surface of the first particle PTC1. In other words, this interior region may be defined as extending from about 10 nm beneath the outer surface to a depth of about 2 $\mu$m.

Because the first particle PTC1 may further include a grain boundary coating part, structural stability may be strengthened, and a coating layer may be formed uniformly (e.g., substantially uniformly) on the surface of the first particle PTC1. In addition, because the first particle PTC1 may further include the grain boundary coating part, the electrical conductivity of the first particle PTC1 may be further improved.

The first particle PTC1 may have an average particle diameter ($D_{50}$) of about 2 $\mu$m to about 15 $\mu$m, about 3 $\mu$m to about 10 $\mu$m, or about 3 $\mu$m to about 7 $\mu$m. The average particle diameter ($D_{50}$) of the first particle PTC1 is larger than the average particle diameter ($D_{50}$) of the second particle PTC2 to be described in more detail later. In one or more embodiments, by measuring particle diameters of about 30 first particles PTC1 randomly selected from among an electron micrograph of a positive electrode active material, a diameter ($D_{50}$) of particles at a cumulative volume of about 50 vol% in the particle size distribution may be obtained as the average particle diameter ($D_{50}$). The primary particle NNP of the first particle PTC1 may have an average particle diameter ($D_{50}$) of about 10 nm to about 400 nm, about 20 nm to about 300 nm, about 100 nm to about 200 nm or about 50 nm to about 200 nm. An average particle diameter ($D_{50}$) of the primary particle NPP may be smaller than the average particle diameter ($D_{50}$) of the second particle PTC2 to be described in more detail later.

The first particle PTC1 may include an olivine-based lithium compound represented by Formula 1.

Formula 1          $Li_{a1}Fe_{x1}B_{y1}PO_{4-b1}$

In Formula 1, $0.8 \leq a1 \leq 1.2$, $0.1 \leq x1 \leq 1.0$ (e.g. $0.1 \leq x1 \leq 0.999$), $0.001 \leq y1 \leq 0.05$, $0 \leq b1 \leq 0.05$, and $x1 + y1 = 1$ are satisfied. B is at least one element selected from among the group including Ti, Mg, V, and/or Nb (e.g., B may be at least one element selected from the group consisting of Ti, Mg, V, and Nb). B may be a dopant doped into the first particle PTC1. For example, B may include Ti.

The first particle PTC1 may further include carbon derived from the above-described coating layer and/or grain boundary coating layer. An amount of carbon element in the first particle PTC1 may be about 0.5 wt% to about 10 wt%, about 1 wt% to about 3 wt%, or about 1.5 wt% to about 2.5 wt%.

The first particle PTC1 may have a sphere shape in which the nano-sized primary particles NNP are aggregated (e.g., agglomerated). With the primary particles NNP being closely aggregated (e.g., agglomerated) with each other, the first particle PTC1 may have the following characteristics. The first particle PTC1 may have a sphere and/or oval shape. The average particle diameter ($D_{50}$) of the first particle PTC1 may be about 2 $\mu$m to about 15 $\mu$m. The first particle PTC1 may have a porosity of about 20% to about 40%. Here, porosity (n) may be defined as the pore volume ($V_p$) divided by the total volume ($V_t$) of particles, or

$$n = \frac{V_p}{V_t}$$

The span value ( $\frac{D_{90}-D_{10}}{D_{50}}$ ) of the first particle PTC1 (e.g., a span value of distribution width of the first particle PTC1), obtained by analysis on the first particle PTC1 with a particle size analyzer, may be about 0.3 to about 0.75. For example, the "span" value may refer to a value obtained by using a calculation formula $(D_{90}-D_{10})/D_{50}$ where $D_{10}$, $D_{50}$, and $D_{90}$ are indicators representing particle sizes. The terms "$D_{10}$", "$D_{50}$", and "$D_{90}$", as used herein, are each an average particle diameter exhibited by a cumulative volume of about 10, 50, or 90 volume%, respectively, of the particles in a particle size distribution.

## Second Particle PTC2

The second particle PTC2 may have a single particle form. In the present specification, the single particle may refer to one particle that exists alone without a grain boundary therein. In terms of morphology, the single particle may refer to one particle, a monolith structure, a single unitary structure, and/or a non-aggregated (e.g., non-agglomerated) particle, existing as an independent phase in which particles do not aggregate with each other. For example, the single particle may be a single crystal. In one or more embodiments, the single particle may be a particle including a few crystals. The single particle may be independently separated. In one or more embodiments, the single particle may be in a form of having about 2 to about 100 single particles attached to each other.

In one or more embodiments, the second particle PTC2 may include a coating layer on a surface thereof. The coating layer may cover the entire surface of the second particle PTC2, or may cover a portion of the surface of the second particle PTC2. For example, the coating layer may include carbon and/or a carbon-including compound. The coating layer may further include at least one selected from among the group including a titanium-including compound, a magnesium-including compound, and/or a vanadium-including compound (e.g., the coating layer may further include at least one selected from the group consisting of a titanium-containing compound, a magnesium-containing compound, and a vanadium-containing compound). A metal-including compound, such as the titanium-including compound, the magnesium-including compound, and the vanadium-including compound, may be, for example, a metal oxide, a metal hydroxide, a metal carbonate, or a composite or mixture thereof. The metal-including compound may further include another metal or non-metal element. For example, the metal-including compound may further include lithium. The second particle PTC2 may have improved structural stability and electrical conductivity due to the coating layer.

The second particle PTC2 may have an average particle diameter ($D_{50}$) of about 10 nm to about 900 nm, about 50 nm to about 500 nm, about 100 nm to about 300 nm, or about 80 nm to about 200 nm. The average particle diameter ($D_{50}$) of the second particle PTC2 may be similar to the average particle diameter ($D_{50}$) of the primary particle NNP of the first particle PTC1. In one or more embodiments, by measuring particle diameters of about 30 second particles PTC2 randomly selected from among an electron micrograph of a positive electrode active material, a diameter ($D_{50}$) of particles at a cumulative volume of about 50 vol% in the particle size distribution may be obtained as the average particle diameter ($D_{50}$).

The second particle PTC2 may include an olivine-based lithium compound represented by Formula 2.

Formula 2          $Li_{a2}Mn_{z2}Fe_{x2}B_{y2}PO_{4-b2}$

In Formula 2, 0.8≤a2≤1.2, 0.5≤z2≤0.9 (e.g. 0.5≤z2≤0.899), 0.1<x2≤0.5 (e.g. 0.1<x2≤0.499), 0.001≤y2≤0.05,0≤b2≤0.05, and x2 + y2 + z2 = 1 are satisfied. B is at least one element selected from among the group including Ti, Mg, V, and/or Nb (e.g., B may be at least one element selected from the group consisting of Ti, Mg, V, and Nb). B may be a dopant doped into the second particle PTC2. For example, B may include Ti.

The second particle PTC2 may further include carbon derived from the coating layer previously described. An amount of carbon element in the second particle PTC2 may be about 0.5 wt% to about 5 wt%, about 0.5 wt% to about 3 wt%, about 1.5 wt% to about 2.5 wt%, or about 0.5 wt% to about 2 wt%. The amount of carbon in the second particle PTC2 may be smaller than the amount of carbon in the first particle PTC1. This is because it is more difficult for the coating layer to be formed smoothly on the second particle PTC2, which may be a single particle, than on the first particle PTC1 which may be a secondary particle.

In the context of the present application and unless otherwise defined, a difference between the single particle form and the secondary particle form lies in their structure, aggregation, and size. The single particle form refers to an individual particle that exists independently without any grain boundaries or interfaces, often as a single crystal or a monolithic structure. These particles do not aggregate with each other and maintain a distinct, non-agglomerated phase, with average particle diameters ($D_{50}$) typically ranging from about 10 nm to about 900 nm, commonly about 50 nm to 500 nm, or about 80 nm to 200 nm. In contrast, the secondary particle form is composed of multiple primary particles (NNP) that are aggregated or agglomerated together, forming a larger composite particle. This aggregation can result in a spherical or oval shape and often includes a grain boundary coating layer that enhances structural stability and electrical conductivity. The average particle diameter ($D_{50}$) of secondary particles is larger, typically ranging from about 2 $\mu$m to about 15 $\mu$m, with common sizes being about 3 $\mu$m to 10 $\mu$m, or about 3 $\mu$m to 7 $\mu$m. In summary, single particles are smaller and exist as isolated units, while secondary particles are larger due to the aggregation of primary particles and may exhibit improved properties due to their composite nature.

Referring back to FIG. 6, the positive electrode active material, according to one or more embodiments of the present disclosure will be described in more detail. The positive electrode active material according to one or more embodiments of the present disclosure includes the first particle PTC1 and the second particle PTC2. The mixing ratio of the first particle PTC1 and the second particle PTC2 in the positive electrode active material may be about 50:50 to about 10:90. In one or more embodiments, the mixing ratio may be about 40:60 to about 20:80. An amount of the second particle PTC2 is equal to or greater than an amount of the first particle PTC1 in the positive electrode active material.

In one or more embodiments, the mixing ratio of the first particle PTC1 and the second particle PTC2 may be adjusted, such that an amount of manganese (Mn), with respect to 100 wt% of the total weight of metal elements other than lithium in the positive electrode active material, becomes about 20 wt% to about 55 wt%.

Because the second particle PTC2 includes Mn, the second particle PTC2, compared with the first particle PTC1, may improve an operating voltage of a rechargeable battery. In the positive electrode active material according to such an embodiment (e.g., an embodiment that the second particle PTC2 includes Mn), because the first particle PTC1 and the second particle PTC2 may be mixed in an appropriate or suitable ratio to adjust the amount of Mn to about 20 wt% to about 55 wt% (e.g., about 20 wt% to about 40 wt%) based on 100 wt% of a total weight of the positive electrode active material, the operating voltage may be improved, compared with the operating voltage of a general LFP battery.

The compound represented by Formula 2, previously described, may have lower electrical conductivity than the compound represented by Formula 1. According to one or more embodiments of the present disclosure, because the second particle PTC2 may be utilized as a single particle, electrical conductivity and low-temperature characteristics of the second particle PTC2 may be improved. At a high voltage, the second particle PTC2 may have structural instability such as pseudo Jahn-teller distortion of Mn, and accordingly, Mn dissolution may occur. However, by utilizing the structurally-stable first particle PTC1 together, such problem may be prevented or reduced.

By mixing the first particle PTC1 that may be a secondary particle and the second particle PTC2 that may be a single particle, the positive electrode active material according to one or more embodiments of the present disclosure may have improved mixture density, capacity, and energy density. In one or more embodiments, the pellet density of the positive electrode active material, according to one or more embodiments of the present disclosure, may be about 2.0 g/cc to about 2.5 g/cc or about 2.3 g/cc to about 2.5 g/cc. Pellet density of an electrode active material typically refers to the bulk density of a compressed pellet formed from the active material powder. Pellet density may be defined as the weight of a pellet divided by its volume. For measuring the pellet density, the active material powder may be filled into a cylindrical mold (e.g., 10 mm diameter) and compressed under a pressure of about 200 MPa using a hydraulic press. The resulting pellet may be measured for its weight using an electronic balance, and for its dimensions (diameter and thickness) using a micrometer. The volume may be calculated assuming a cylindrical shape. The pellet density may then be calculated as the mass divided by the volume (g/cc). The measurement may be conducted at room temperature (e.g., 25 ±2°C) under atmospheric pressure. A rechargeable lithium battery including the positive electrode active material according to one or more embodiments of the present disclosure may have improved low-temperature characteristics.

Because the second particle PTC2, which may be a single particle, has an extremely small average particle diameter, a large amount of the binder BND may be desired or required to bind the second particle PTC2 to the current collector COL1 (see FIG. 1). Because the positive electrode active material according to one or more embodiments of the present disclosure further includes the first particle PTC1 having a large average particle diameter, as well as the second particle PTC2, the positive electrode active material layer AML1 may be easily bound to the current collector COL1. For example, through the first particle PTC1, the amount of the binder BND in the positive electrode active material layer AML1 may be reduced.

The positive electrode active material according to one or more embodiments of the present disclosure may further include a third particle additionally, as well as the first particle PTC1 and the second particle PTC2 previously described. The third particle may include a lithium transition metal composite oxide. In particular, the third particle may include a lithium nickel-based oxide, a lithium cobalt-based oxide, a lithium manganese-based oxide, a cobalt-free nickel-manganese-based oxide, and/or a (e.g., any suitable) combination thereof.

For example, the third particle may include a compound represented by any one selected from among the following formulae: $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); and/or $Li_{(3-f)}Fe_2(PO_4)_3$ ($0 \leq f \leq 2$).

In the formulae above, A is nickel (Ni), cobalt (Co), Mn, and/or a (e.g., any suitable) combination thereof; X is Al, Ni, Co, Mn, chromium (Cr), iron (Fe), Mg, Sr, V, a rare earth element, and/or a (e.g., any suitable) combination thereof; D is oxygen (O), fluorine (F), sulfur (S), phosphorus (P), and/or a (e.g., any suitable) combination thereof; G is Al, Cr, Mn, Fe, Mg, lanthanum (La), cerium (Ce), Sr, V, and/or a (e.g., any suitable) combination thereof; and $L^1$ is Mn, Al, and/or a (e.g., any suitable) combination thereof.

In one or more embodiments, the third particle may include a compound with a layered structure, represented by Formula 3.

$$\text{Formula 3} \qquad Li_{a3}Ni_{x3}Ma_{1-x3}O_{b3}$$

In Formula 3, $0.5 \leq a3 \leq 1.5$, $0.6 \leq x3 \leq 0.99$, $1.8 \leq b3 \leq 2.2$, and $0.01 \leq 1-x3 \leq 0.4$ may be satisfied. Ma may include at least one selected from among the group including Co, Al, and/or Mn (e.g., Ma may include at least one selected from the group consisting of Co, Al, and Mn).

In one or more embodiments, the third particle may include a high nickel-based positive electrode active material, in which an amount of nickel is about 80 mol% or greater, about 85 mol% or greater, about 90 mol% or greater, about 91 mol% or greater, or about 94 mol% to about 99 mol% with respect to 100 mol% of a total mole of metals other than lithium in the lithium transition metal composite oxide. The high nickel-based positive electrode active material may provide high capacity, thereby improving capacity and energy density of the positive electrode active material layer AML1.

**Preparation Method of Positive Electrode Active Material**

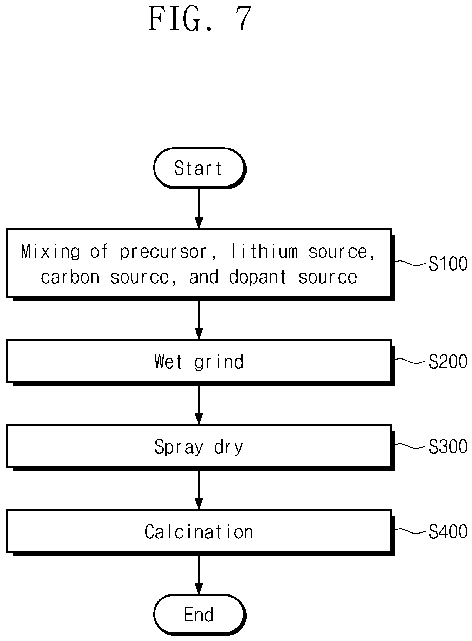

FIG. 7 is a flowchart showing a preparation method of a positive electrode active material, according to one or more embodiments of the present disclosure. Referring to FIG. 7, preparation of a first particle PTC1 according to one or more embodiments of the present disclosure will be described in more detail.

An iron phosphate precursor, a lithium source, a carbon source, and/or a dopant source may be added to a solvent, and mixed (S100). For example, the solvent may be water, ethanol, and/or the like. The iron phosphate precursor may be a compound including both (e.g., simultaneously) iron (Fe) and phosphorus (P), and/or a (e.g., any suitable) mixture of an iron (Fe)-including compound and a phosphorus (P)-including compound. For example, the iron phosphate precursor may include $FePO_4 \cdot H_2O$, and/or a (e.g., any suitable) mixture of $FeSO_4$ and $H_3PO_4$.

The lithium source may include at least one selected from among the group including (e.g., at least one selected from the group consisting of) lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and/or lithium citrate.

The carbon source may include at least one selected from among the group including (e.g., at least one selected from the group consisting of) glucose, sucrose, fructose, cellulose, starch, citric acid, polyacrylic acid, polyethylene glycol, and/or dopamine.

The dopant source may include a dopant metal-including oxide and/or a dopant metal-including chloride. For example, the dopant source may include at least one selected from among the group including (e.g., at least one selected from the group consisting of) titanium oxide, magnesium oxide, vanadium oxide, and/or niobium oxide.

Wet grinding may be performed on the mixture (S200). For the wet grinding, a general wet mill capable of temperature control may be utilized. In particular, at least one selected from among a beads mill, a ball mill, an attrition mill, an apex mill, a super mill, and/or a basket mill may be utilized for the wet grinding. Through the wet grinding process, particles in the mixture may be ground to a fine size.

According to one or more embodiments of the present disclosure, the wet grinding (S200) may also not be provided. In particular, in order to maximize or increase the average particle diameter ($D_{50}$) of the first particle PTC1 to be finally prepared, the wet grinding (S200) of precursor particles may also not be provided.

The solvent may be removed from the mixture to form a dried mixture. According to one or more embodiments of the present disclosure, the forming of the dried mixture may include performing spray drying on the mixture (S300). A generally-utilized spray-drying device may be utilized for the spray drying. For example, the spray drying may be performed by utilizing at least one selected from among an ultrasonic spray-drying device, an air nozzle spray-drying device, an ultrasonic nozzle spray-drying device, a filter expansion droplet-generating device, and/or an electrostatic spray-drying device.

The particles (the first particles), finely reduced to a size of a primary particle after the wet-grinding process, may be aggregated (e.g., agglomerated) with each other through the spray-drying process to thereby form a secondary particle. Therefore, by adjusting the flow amount and flow rate of carrier gas, temperature, the residence time in a reactor, internal pressure, and/or the like during the spray drying process, the first particle PTC1 may be formed into the secondary particle of a desired or suitable size.

In one or more embodiments, the mixture (e.g., the mixture that is ready to be spray-dried) may have a total solid content (e.g., amount) (TSC) of about 20 wt% to about 40 wt% based on 100 wt% of a total weight of the mixture. The total solid content (e.g., amount) may refer to a converted value to percentage of the weight of a solid material remaining after solvent evaporation (e.g., dried mixture) with respect to 100 wt% of the total weight of the mixture (e.g., spray liquid). For example, the spray liquid may have a total solid content (e.g., amount) of about 30 wt% based on 100 wt% of the total weight of the spray liquid.

If (e.g., when) the total solid content (e.g., amount) is less than about 20 wt% with respect to 100 wt% of the total weight of the mixture, disadvantages in that an average particle diameter ($D_{50}$) of the first particle PTC1 decreases and productivity is reduced may be caused. If (e.g., when) the total solid content (e.g., amount) is greater than about 40 wt% with respect to 100 wt% of the total weight of the mixture, adjusting the average particle diameter ($D_{50}$) of the first particle PTC1 may become difficult, and size difference between the first particles PTC1 may increase.

The spray liquid according to one or more embodiments may have a viscosity of about 1500 mPa·s to about 2500 mPa·s with the above-mentioned total solid content (e.g., amount) (e.g., the total solid content of about 20 wt% to about 40 wt% based on 100 wt% of a total weight of the mixture/spray liquid). For example, the spray liquid may have a viscosity of about 2000 mPa·s. Viscosity may be measured using a rotational viscometer, such as a Brookfield viscometer, at a temperature of 25 °C under a fixed shear rate (e.g., 10 s$^{-1}$), unless otherwise specified.

In one or more embodiments, the spray drying may be performed at a temperature of about 100 °C to about 300 °C. Spray gas (for example, air), utilized for the spray drying, may be injected at a first temperature, and discharged at a second temperature. For example, the first temperature may be about 200 °C to about 250 °C. The second temperature may be about 80 °C to about 150 °C.

The spray liquid for the spray drying may have a flow rate of about 30 mL/min to about 80 mL/min. If (e.g., when) the flow rate is less than about 30 mL/min, disadvantages of nozzle clogging, reduced productivity, and/or the like may be caused. If (e.g., when) the flow rate is greater than about 80 mL/min, due to moisture condensation in the spray-drying device, the mixture may not be dried completely. The spray liquid may have an input pressure of about 0.3 MPa to about 0.7 MPa. For example, the input pressure of the spray liquid may be about 0.5 MPa.

The dried mixture may be calcined in an inert atmosphere (S400). The inert atmosphere may be a nitrogen atmosphere and/or an argon atmosphere. The temperature at which the calcination process is performed may be about 500 °C to about 1000 °C, or about 600 °C to about 800 °C. The execution time of the calcination process may be about 4 hours to about 20 hours, or about 6 hours to about 12 hours. As the dried mixture is calcined, the first particle PTC1 including the compound represented by Formula 1, previously described, may be formed.

In the preparation of the first particle PTC1, according to one or more embodiments of the present disclosure, the carbon source may be introduced to the iron phosphate precursor to form a carbon coating layer uniformly (e.g., substantially uniformly) on surfaces of primary particles. Thereafter, the primary particles may be closely aggregated (e.g., agglomerated), through the spray drying, to form a dense sphere-shaped secondary particle. As a result, the first particle PTC1 may include the stable carbon coating layer in the outside and inside of the first particle PTC1, and may thus have a relatively high carbon content (e.g., amount). Due to the high carbon content (e.g., amount) of the first particle PTC1, a positive electrode active material layer AML1 may have improved conductivity.

Preparation of a second particle PTC2 according to one or more embodiments of the present disclosure will be described in more detail. A manganese iron phosphate precursor, a lithium source, a carbon source, and/or a dopant source may be added to a solvent and mixed. For example, the solvent may be water, ethanol, and/or the like.

The manganese iron phosphate precursor may be a compound including all of manganese (Mn), iron (Fe), and phosphorus (P); a mixture of a manganese (Mn)-including compound and/or an iron (Fe) and phosphorus (P)-including compound; and/or a (e.g., any suitable) mixture of a manganese (Mn)-including compound, an iron (Fe)-including compound, and/or a phosphorus (P)-including compound. For example, the manganese iron phosphate precursor may include $Mn_xFe_{1-x}PO_4 \cdot H_2O$; a mixture of $MnCO_3$ and $FePO_4 \cdot H_2O$; and/or a (e.g., any suitable) mixture of $MnCO_3$, $FeSO_4$, and $H_3PO_4$. Here, x may be about 0.5 to about 0.9.

The lithium source, the carbon source, and/or the dopant source may be the same or similar as/to those in the preparation of the first particle PTC1 previously described.

Wet grinding may be performed on the mixture. The wet grinding process may be the same or similar as/to that in the preparation of the first particle PTC1 previously described.

The solvent may be removed from the mixture to form a dried mixture. The forming of the dried mixture may include performing direct evaporation on the mixture. For example, the direct evaporation may include static drying and/or spray drying. In one or more embodiments, to form the second particle PTC2 into a single particle, it may utilized the static drying.

The dried mixture may be calcined in an inert atmosphere. The conditions of the calcination process may be the same or similar as/to those in the preparation of the first particle PTC1 previously described. As the dried mixture is calcined, the second particle PTC2 including the compound represented by Formula 2, previously described, may be formed.

Dry grinding may be performed on the calcined second particle PTC2. Accordingly, the second particle PTC2 may have a single particle form. In one or more embodiments, for the first particle PTC1 previously described, the dry grinding may not be provided.

By mixing the prepared first particle PTC1 and second particle PTC2 in an appropriate or suitable ratio, the positive electrode active material according to one or more embodiments of the present disclosure may be formed.

Analysis on a carbon element according to one or more embodiments of the present disclosure may be performed utilizing an Elementar Micro Cube elemental analyzer. The specific operation method and conditions are as follows. A sample of 1 to 2 mg is weighed in a tin cup, placed in an automatic sampling tray and introduced into a combustion tube through a ball valve, and the combustion is carried out at a combustion temperature of about 1000 °C. Subsequently, reduction of the combustion gas utilizing reduced copper is carried out to form carbon dioxide. Carbon dioxide was detected utilizing a thermal conductivity detector (TCD).

Scanning electron microscope-energy dispersive X-ray spectroscopy (SEM-EDS) and quantitative analyses on a particle surface may be conducted to measure the carbon content (e.g., amount) according to one or more embodiments of the present disclosure. In addition to SEM-EDS, inductively coupled plasma-mass spectrometry (ICP-MS), inductively coupled plasma optical emission spectroscopy (ICP-OES), and/or the like may be utilized to measure the carbon content (e.g., amount).

Hereinafter, examples and comparative examples of the present disclosure are described. However, the following examples are provided for illustrative purpose only and are not to be construed to limit the scope of the present disclosure.

**Example 1: Preparation of First Particle in Form of Secondary Particle**

An iron phosphate precursor ($Fe_1PO_4$), lithium carbonate, and titanium dioxide were mixed in a molar ratio of about 1:1.03:0.03. 10 wt% of glucose was further added to the mixture. The slurry mixture was dried over evaporation, through spray drying, under conditions of a spray pressure of about 0.5 MPa and a temperature of about 230 °C. The dried mixture was calcined in a nitrogen atmosphere at about 750 °C and for about 10 hours to obtain a first particle in the form of a secondary particle (e.g., the secondary particle may be formed by the first particle). The average size of primary particles in the first particle was about 100 nm to about 200 nm.

**Example 2: Preparation of First Particle in Form of Single Particle (Comparative Example)**

An iron phosphate precursor ($Fe_1PO_4$), lithium carbonate, and titanium dioxide were mixed in a molar ratio of about 1:1.03:0.03. 10 wt% of glucose was added to the mixture. Wet grinding was performed on the mixture by ball milling. The mixture was dried over evaporation on a tray by heating, and then dried in a vacuum oven at about 120 °C for about 4 hours. The dried mixture was calcined in a nitrogen atmosphere at about 750 °C for about 10 hours. The calcined product was ground to obtain a first particle in the form of a single particle. The average size of the first particle was about 300 nm to about 400 nm.

**Example 3: Preparation of Second Particle in Form of Single Particle**

An iron phosphate precursor ($Mn_{0.6}Fe_{0.4}PO_4$), lithium carbonate, and titanium dioxide were mixed in a molar ratio of about 1:1.03:0.03. 12 wt% of glucose was added to the mixture. Wet grinding was performed on the mixture by ball milling. The mixture was dried over evaporation on a tray by heating, and then dried in a vacuum oven at about 120 °C for about 4 hours. The dried mixture was calcined in a nitrogen atmosphere at about 750 °C for about 10 hours. The calcined product was ground to obtain a second particle in the form of a single particle. The average size of the second particle was about 100 nm to about 300 nm.

In other words, the primary distinction between the single particle form and the secondary particle form of the first particle PTC1 lies in their preparation methods and resulting sizes. For **Example 1: Preparation of First Particle in Form of Secondary Particle,** an iron phosphate precursor ($Fe_1PO_4$), lithium carbonate, and titanium dioxide were mixed with 10 wt% glucose, then spray dried at 230 °C under 0.5 MPa pressure, and calcined at 750 °C for 10 hours, resulting in secondary particles with primary particle sizes of about 100 nm to 200 nm. Conversely, for **Example 2: Preparation of First Particle in Form of Single Particle,** the same mixture with 10 wt% glucose was wet ground using ball milling, dried in a vacuum oven at 120 °C for 4 hours, and calcined at 750 °C for 10 hours, producing single particles with sizes of about 300 nm to 400 nm. **Example 3: Preparation of Second Particle in Form of Single Particle** used $Mn_{0.6}Fe_{0.4}PO_4$ as the precursor, with similar wet grinding, drying, and calcination steps, yielding single particles sized about 100 nm to 300 nm. Thus, secondary particles are aggregates of smaller primary particles, while single particles are larger, non-aggregated units.

**Example 4-1: Mixture Preparation of First Particle and Second Particle**

The first particle according to Example 1 and the second particle according to Example 3 were mixed in a mass ratio of about 1:9 to prepare a positive electrode active material.

**Example 4-2: Mixture Preparation of First Particle and Second Particle**

The first particle according to Example 1 and the second particle according to Example 3 were mixed in a mass ratio of about 2:8 to prepare a positive electrode active material.

**Example 4-3: Mixture Preparation of First Particle and Second Particle**

The first particle according to Example 1 and the second particle according to Example 3 were mixed in a mass ratio of about 3:7 to prepare a positive electrode active material.

**Example 4-4: Mixture Preparation of First Particle and Second Particle**

The first particle according to Example 1 and the second particle according to Example 3 were mixed in a mass ratio of about 4: to prepare a positive electrode active material.

**Example 4-5: Mixture Preparation of First Particle and Second Particle**

The first particle according to Example 1 and the second particle according to Example 3 were mixed in a mass ratio of about 5:5 to prepare a positive electrode active material.

**Preparation of Positive Electrode**

95 wt% of a final positive electrode active material (e.g., the positive electrode active material prepared in Example 4-1 to Example 4-5), 3 wt% of a polyvinylidene fluoride binder, and 2 wt% of a carbon black conductive material were mixed in an N-methylpyrrolidone solvent to prepare a positive electrode active material slurry. The positive electrode active material slurry was applied to an aluminium current collector and dried, and then rolling was performed to prepare a positive electrode.

**Manufacture of Rechargeable Lithium Battery**

The prepared positive electrode and a lithium metal counter electrode, as a counter electrode, were utilized to prepare a 2032-type (kind) coin half-cell. A separator (thickness: about 16 $\mu$m) formed of a porous polyethylene (PE) film was interposed between the positive electrode and the lithium metal counter electrode, and an electrolyte solution was introduced to manufacture a rechargeable lithium battery. The electrolyte solution obtained by mixing $LiPF_6$ of 1.3 M in a mixed solvent including ethylene carbonate (EC), ethylmethyl carbonate (EMC), and dimethyl carbonate (DMC) in a volume ratio of about 3:4:3 was utilized as an electrolyte.

**Evaluation Example 1: Surface Analysis of Positive Electrode Active Material**

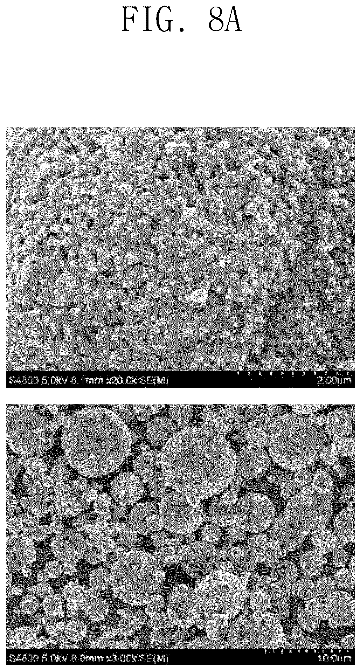

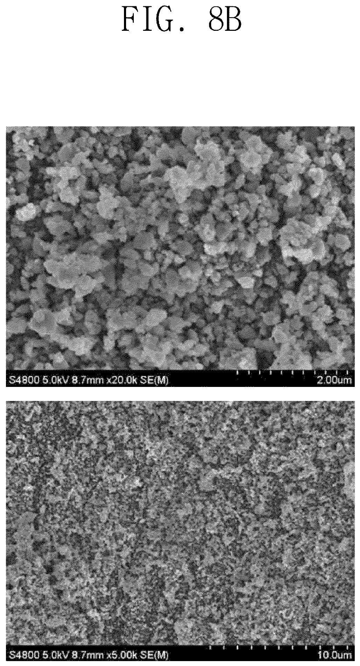

FIG. 8A shows a scanning electron microscope (SEM) image of the positive electrode active material prepared according to Example 1. FIG. 8B shows a SEM image of the positive electrode active material prepared according to Example 3. Referring to FIG 8A, it may be seen that the first particle according to the example (Example 1) of the present disclosure has the form of a sphere-shaped secondary particle in which a plurality of primary particles are aggregated (e.g., agglomerated). Referring to FIG. 8B, it may be seen that the second particle according to the example (Example 3) of the present disclosure has the form of a fine nano-sized single particle.

**Evaluation Example 2: Evaluation on Active Material**

The pellet densities (PD) and carbon contents of the positive electrode active materials according to Examples 1, 2, 3, 4-1, 4-2, 4-3, 4-4, and 4-5 were measured, and the results were listed in Table 1.

Table 1

|  | Mixing ratio | | Powder | |
|---|---|---|---|---|
|  | Single particle | Secondary particle | PD (g/cc) | C content (e.g., amount) (wt%) |
| Example 1 | 0% | 100% | 2.41 | 1.8 |
| Example 2 | 100% | 0% | 2.41 | 1.3 |
| Example 3 | 100% | 0% | 2.28 | 1.9 |
| Example 4-1 | 90% | 10% | 2.40 | 1.81 |
| Example 4-2 | 80% | 20% | 2.38 | 1.82 |
| Example 4-3 | 70% | 30% | 2.37 | 1.83 |
| Example 4-4 | 60% | 40% | 2.36 | 1.84 |
| Example 4-5 | 50% | 50% | 2.35 | 1.85 |

Referring to Table 1, it may be seen that the positive electrode active materials according to Examples 4-1 to 4-5 of the present disclosure have more excellent or suitable pellet densities than the positive electrode active material according to Example 3. In addition, it may be seen that the positive electrode active materials according to Examples 4-1 to 4-5 of the present disclosure have higher carbon contents than the positive electrode active materials according to Examples 1 and 2.

**Evaluation Example 3: Evaluation on Battery Characteristics**

Characteristics of rechargeable lithium batteries prepared utilizing the positive electrode active materials according to Examples 1, 2, 3, 4-1, 4-2, 4-3, 4-4, and 4-5 were evaluated.

For initial charging and discharging, the rechargeable lithium battery was initially charged under conditions of a constant current (0.2 C) and a constant voltage (4.25 V), was rested for about 10 minutes and then discharged with a constant current (0.2 C) until a voltage reached 2.5 V. Thereafter, the charging and discharging cycle was performed 1 time at about -20 °C under about 0.2 C/0.2 C conditions. The results of evaluating the battery characteristics were listed in Table 2.

Table 2

|  | Mixing ratio | | Coin cell | | | | |
|---|---|---|---|---|---|---|---|
|  | Single particle | Seconda ry particle | Charge amount at 4.25 V (mAh/g) | Discharge amount at 4.25 V (mAh/g) | Efficienc y at 4.25 V (%) | Average voltage (V) | Capacity at -20 °C (mAh/g) |
| Example 1 | 0% | 100% | 166.2 | 163.2 | 98.2 | 3.20 | 92.6 |
| Example 2 | 100% | 0% | 165.7 | 160.2 | 96.7 | 3.20 | 48.8 |
| Example 3 | 100% | 0% | 151.3 | 144.6 | 95.6 | 3.60 | 108.3 |

(continued)

| | Mixing ratio | | Coin cell | | | | |
|---|---|---|---|---|---|---|---|
| | Single particle | Seconda ry particle | Charge amount at 4.25 V (mAh/g) | Discharge amount at 4.25 V (mAh/g) | Efficienc y at 4.25 V (%) | Average voltage (V) | Capacity at -20 °C (mAh/g) |
| Example 4-1 | 90% | 10% | 164.7 | 161.3 | 97.9 | 3.2 | 94.2 |
| Example 4-2 | 80% | 20% | 163.2 | 159.4 | 97.7 | 3.27 | 95.7 |
| Example 4-3 | 70% | 30% | 161.7 | 157.5 | 97.4 | 3.33 | 97.3 |
| Example 4-4 | 60% | 40% | 160.2 | 155.7 | 97.2 | 3.35 | 98.9 |
| Example 4-5 | 50% | 50% | 158.7 | 153.8 | 96.9 | 3.39 | 100.5 |

Referring to Table 2, it may be seen that the rechargeable batteries according to Examples 4-1 to 4-5 of the present disclosure have higher capacities at about -20 °C than the rechargeable batteries according to Examples 1 and 2. It may be seen that the rechargeable batteries according to Examples 4-1 to 4-5 of the present disclosure have higher average voltages than the rechargeable batteries according to Examples 1 and 2. Furthermore, it may be seen that the rechargeable batteries according to Examples 4-1 to 4-5 of the present disclosure have more excellent or suitable charge and discharge efficiency than the rechargeable batteries according to Examples 2 and 3.

A positive electrode active material according to one or more embodiments of the present disclosure may include a first particle which is a secondary particle, and a second particle which is a single particle. Accordingly, a positive electrode active material layer may have improved electrical conductivity and mixture density (due to a smoothly formed coating layer on the first particle in a form of a secondary particle), and an amount of a binder in the positive electrode active material layer may be reduced (due to the small average particle diameter of the second particle which is a single particle). A rechargeable lithium battery according to one or more embodiments of the present disclosure may have a relatively high operating voltage and improved low-temperature characteristics, and Mn dissolution may be prevented or reduced.

As utilized herein, the terms "substantially," "about," and similar terms are utilized as terms of approximation and not as terms of degree, and are intended to account for the inherent deviations in measured or calculated values that would be recognized by those of ordinary skill in the art. "About" or "approximately," as utilized herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in the specification is intended to include all higher numerical limitations subsumed therein.

A battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device utilizing a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although one or more embodiments of the present disclosure have been described with reference to the accompanying drawings, it is understood that the present disclosure should not be limited to these embodiments but one or more suitable changes and modifications may be made within the scope of the claims, the detailed description of the present disclosure, and the accompanying drawings, and this also falls within the scope of the present disclosure and equivalents thereof.

Embodiments are set out in the following clauses:

Clause 1. A preparation method of a positive electrode active material, the method comprising:

preparing a first particle having a first average particle diameter;
preparing a second particle having a second average particle diameter smaller than the first average particle diameter; and
mixing the first particle and the second particle,
wherein the preparing of the first particle comprises:

mixing an iron phosphate precursor, a first lithium source, a first carbon source, and a first dopant source to form a first mixture,
drying the first mixture through spray drying, and
calcining the dried first mixture,

the preparing of the second particle comprises:

mixing a manganese iron phosphate precursor, a second lithium source, a second carbon source, and a second dopant source to form a second mixture,
performing wet grinding on the second mixture,
drying the second mixture, and
calcining the dried second mixture, and

the first particle and the second particle are mixed, wherein an amount of the second particle is equal to or greater than an amount of the first particle.

Clause 2. The preparation method of clause 1, wherein a mixing ratio of the first particle and the second particle is about 50:50 to about 10:90.

Clause 3. The preparation method of clause 1 or clause 2, wherein the first mixture, which is utilized as a spray liquid for the spray drying, has a total solid content of about 20 wt% to about 40 wt% based on 100 wt% of a total weight of the first mixture, and a viscosity of about 1500 mPa·s to about 2500 mPa·s.

Clause 4. The preparation method of any one of clauses 1 to 3, wherein the spray drying comprises forming a secondary particle by an agglomeration of particles in the first mixture.

Clause 5. The preparation method of any one of clauses 1 to 4,

wherein the spray drying is performed at a temperature of about 100 °C to about 300 °C, and
a spray liquid for the spray drying has an input pressure of about 0.3 MPa to about 0.7 MPa, and a flow rate of about 30 ml/min to about 80 ml/min.

**Claims**

1. A positive electrode active material comprising:

a first particle comprising a compound represented by Formula 1 and having a first average particle diameter; and
a second particle comprising a compound represented by Formula 2 and having a second average particle diameter smaller than the first average particle diameter,
wherein an amount of the second particle is equal to or greater than an amount of the first particle:

$$\text{Formula 1} \qquad Li_{a1}Fe_{x1}B_{y1}PO_{4-b1},$$

where, in Formula 1, $0.8 \le a1 \le 1.2$, $0.1 \le x1 \le 1.0$, $0.001 \le y1 \le 0.05$, $0 \le b1 \le 0.05$, and $x1 + y1 = 1$,

$$\text{Formula 2} \qquad Li_{a2}Mn_{z2}Fe_{x2}B_{y2}PO_{4-b2},$$

where, in Formula 2, $0.8 \le a2 \le 1.2$, $0.5 \le z2 \le 0.9$, $0.1 \le x2 \le 0.5$, $0.001 \le y2 \le 0.05$, $0 \le b2 \le 0.05$, and $x2 + y2 + z2 = 1$, and
in Formula 1 and Formula 2, B is at least one element selected from the group consisting of Ti, Mg, V, and Nb.

2. The positive electrode active material of claim 1,

wherein the first particle is a sphere-shaped secondary particle, and
the second particle is a single particle.

3. The positive electrode active material of claim 1 or claim 2, wherein a mixing ratio of the first particle and the second particle is about 50:50 to about 10:90.

4. The positive electrode active material of any one of claims 1 to 3, wherein an amount of Mn, with respect to 100 wt% of a total weight of metal elements other than lithium in the positive electrode active material, is about 20 wt% to about 55 wt%.

5. The positive electrode active material of any one of claims 1 to 4, wherein a pellet density of the positive electrode active material is about 2.0 g/cc to about 2.5 g/cc.

6. The positive electrode active material of any one of claims 1 to 5, wherein the first particle comprises a first coating layer including carbon, and an amount of carbon in the first particle is about 1.5 wt% to about 2.5 wt% based on 100 wt% of a total weight of the first particle.

7. The positive electrode active material of claim 6,

wherein the first particle further comprises a grain boundary coating layer on an interface between primary particles of the first particle, and
the grain boundary coating layer comprises carbon.

8. The positive electrode active material of any one of claims 1 to 7, wherein the first particle has a porosity of about 20% to about 40%.

9. The positive electrode active material of any one of claims 1 to 8, wherein a span value, obtained by analysis on the first particle with a particle size analyzer, is about 0.3 to about 0.75.

10. The positive electrode active material of any one of claims 1 to 9, further comprising a third particle comprising a compound represented by Formula 3:

$$\text{Formula 3} \qquad Li_{a3}Ni_{x3}Ma_{1-x3}O_{b3},$$

wherein, in Formula 3, $0.5 \le a3 \le 1.5$, $0.6 \le x3 \le 0.99$, $1.8 \le b3 \le 2.2$, and $0.01 \le 1-x3 \le 0.4$, and
Ma is at least one selected from among the group comprising Co, Al, and Mn.

11. The positive electrode active material of any one of claims 1 to 10, wherein the second particle comprises a second coating layer comprising carbon, and
an amount of carbon in the second particle is about 1.5 wt% to about 2.5 wt% based on 100 wt% of a total weight of the second particle.

12. The positive electrode active material of any one of claims 1 to 11, wherein the first average particle diameter is about 3 μm to about 7 μm.

13. The positive electrode active material of any one of claims 1 to 12, wherein the second average particle diameter is about 50 nm to about 500 nm.

14. The positive electrode active material of any one of claims 1 to 13, wherein the first particle comprises an agglomeration of a plurality of primary particles, and
an average particle diameter of the plurality of primary particles is smaller than the second average particle diameter.

15. A method of preparing a positive electrode active material comprising:

preparing a first particle having a first average particle diameter;
preparing a second particle having a second average particle diameter smaller than the first average particle diameter; and
mixing the first particle and the second particle,
wherein the preparing of the first particle comprises:

mixing an iron phosphate precursor, a first lithium source, a first carbon source, and a first dopant source to form a first mixture,
drying the first mixture through spray drying, and
calcining the dried first mixture,

the preparing of the second particle comprises:

mixing a manganese iron phosphate precursor, a second lithium source, a second carbon source, and a second dopant source to form a second mixture,
performing wet grinding on the second mixture,
drying the second mixture, and
calcining the dried second mixture, and

the first particle and the second particle are mixed, wherein an amount of the second particle is equal to or greater than an amount of the first particle.

# FIG. 1

ELL

Li$^+$

COL1 AML1          30          COL2 AML2

10                                    20

# FIG. 2

# FIG. 3

# FIG. 4

100

50

72

40

71

10

30

20

# FIG. 5

# FIG. 6

# FIG. 7

```
            ┌─────────┐
            │  Start  │
            └─────────┘
                 │
                 ▼
┌──────────────────────────────────────┐
│ Mixing of precursor, lithium source, │ ─── S100
│   carbon source, and dopant source   │
└──────────────────────────────────────┘
                 │
                 ▼
┌──────────────────────────────────────┐
│              Wet grind               │ ─── S200
└──────────────────────────────────────┘
                 │
                 ▼
┌──────────────────────────────────────┐
│              Spray dry               │ ─── S300
└──────────────────────────────────────┘
                 │
                 ▼
┌──────────────────────────────────────┐
│             Calcination              │ ─── S400
└──────────────────────────────────────┘
                 │
                 ▼
            ┌─────────┐
            │   End   │
            └─────────┘
```

# FIG. 8A

# FIG. 8B